# EUROPEAN PATENT SPECIFICATION

(11) **EP 2 332 877 B1**
(45) Date of publication and mention of the grant of the patent: **08.08.2012**
(21) Application number: 09178267.2
(22) Date of filing: 08.12.2009
(51) Int. Cl.: B66C 13/16, G01G 19/18, G01G 23/37

(54) **Arrangement for detecting a property of load manipulated by lifting means**
Anordnung zur Feststellung einer Eigenschaft von mittels Hebevorrichtungen manipulierten Lasten
Agencement pour détecter la propriété d'une charge manipulée par des supports de levage

(43) Date of publication of application: 15.06.2011
(73) Proprietor: TAMTRON OY, 33561 Tampere (FI)
(72) Inventor: Asikainen, Pentti, 35800, Mänttä (FI)
(74) Representative: Kupiainen, Juhani Kalervo

(56) References cited:
- WO-A1-97/40352
- WO-A1-2004/005180
- JP-A- 2006 250 582
- US-A1- 2003 102 170
- US-A1- 2007 013 199

## Description

### FIELD OF THE INVENTION

This invention relates generally to an arrangement for detecting a property of load manipulated by lifting means. The present invention van be applied e.g. in a weighing arrangement, which is used for weighing material being lifted with a crane of a material transfer vehicle, for example. The material transfer vehicle may be e.g. a timber truck, a forwarder or a harvester.

### BACKGROUND OF THE INVENTION

Cranes often include a weighing arrangement for weighing the material being lifted. Such a crane with a prior art weighing arrangement is disclosed in a patent document FI84759 and illustrated in Figure 1. The crane includes movable boom which has several beams with articulated joints. At the end of the boom set there is rotator 5 coupled to the boom. At the other end of the rotator there is material actuating means 6, such as a grapple head for catching timber. There is a sensor element 1 between the boom and the rotator for measuring the weight of the load. The sensor element 1 is attached between the boom and the rotator with joints 8, 9. When a strain gauge is used as a sensor, the signal from the sensor is lead through a signal cable 2 to amplifier 3, and the amplified signal is further led with a cable to a measurement/control unit 4 which includes a user interface. If a hydraulic measurement is used, there is a hydraulic cylinder at the sensor element 1, and a hydraulic hose 2 is led from the measurement point 1 to a unit 3 including a pressure sensor and amplifier. The signal is further led via an electric cable to the measurement/control unit 4.

The prior art arrangement of document FI84759 for weighing lifted material has a certain disadvantage. It is often difficult to lead the electric cable or the hydraulic hose along the articulated boom in such a way that it is secured from physical strain and impacts while the crane is used. One solution for this problem could be to replace the cable by providing the sensor with wireless communications by integrating wireless data transfer means with the sensor. However, this solution also includes some disadvantages. The electronics required for processing the sensor signal and for wireless data transfer needs an energy source such as a loadable battery. In order to provide energy for a whole working day, for example, the battery must have a considerable capacity and size. As a result, the housing for the sensor and electronics would be relatively large. When such unit is located by the rotator of the crane there is a risk that it is exposed to physical impacts when the crane is under use. Such impacts may break the housing and/or cause the electronics to become inoperative or inaccurate.

WO2004/5180A1 discloses a weighing arrangement in a lifting apparatus where a strain gauge is fixed to the boom of the lifting apparatus, and there is a signal cable led along the articulating beam. WO97/40352 discloses a refuse weighing arrangement where a strain gauge is fixed to an articulating boom. The signal of the strain gauge is led to an electronics unit with a cable. The electronics units of the trucks may be in contact with a central host computer with a wireless communication system.

### SUMMARY OF THE INVENTION

The objective of the present invention is to avoid or at least alleviate the aforesaid defects of prior art solutions and to achieve a solution by which a more reliable functionality is achieved.

The object of the invention is met by a solution, wherein there is an electronic or hydraulic sensor, preferably installed between the boom and the rotating part of the rotator of the lifting means, and a signal from the sensor is lead by an electric or hydraulic cable to an electronics unit which is located at the boom of the lifting means. The electronics unit has means for wireless data transfer and an energy source for signal processing means and data transfer means.

The arrangement according to the invention is characterized by claim 1.

According to one embodiment of the invention the sensor is an electrical sensor, such as a strain gauge for weighing the load. According to one further embodiment, the sensor associated electronics, such as an amplifier and/or analog-to-digital converter is integrated to a same housing with the sensor. According to another embodiment the sensor associated electronics, such as an amplifier and/or analog-to-digital converter is located in the electronics unit.

According to one embodiment the sensor is a hydraulic sensor, such as a hydraulic cylinder, which is connected to the electronics unit with a hydraulic hose. The hydraulic cylinder may thus be a part of a hanger. The electronics unit includes a pressure sensor for converting the hydraulic pressure into an electric signal. The hydraulic sensor is preferably used for weighing the load. In another embodiment the pressure sensor is located by the hydraulic cylinder, and there is a signal cable between the pressure sensor and the electronics unit.

The sensor may also read/measure some other property of the load than weight. It may be e.g. a reader for an RFID tag which is attached to the load. The RFID tag may include information about the load such as quality, owner or transport destination of the load etc. The sensor may also measure either properties of the load than weight, such as width of the load. Such a sensor may be based on mechanical or optical measurement, for example.

The energy source of the electronics unit may preferably be a loadable battery. There may also be a solar cell or a generator which produces electrical energy from movement of the lifting means. Such means can be used as the primary energy source or they can be used for loading a battery.

Various other embodiments of the present invention are disclosed in the dependent claims.

It is possible to achieve substantial advantages with the present invention. The sensor can be a small, simple and compact component, which is easy install between the boom and the rotating part of the rotator, such as into a hanger between the boom end and the rotator. The electronics unit for transmission electronics and battery can be installed inside the boom, whereby the risk for direct physical impacts to the unit is very small. It is also possible to use a large space for the electronics unit, whereby it is possible to use a battery with large capacity, or other kinds of energy sources.

In this patent application, the "material transfer vehicle" refers at least to all kinds of vehicles having lifting means and manipulating means for lifting/transferring material loads. The transfer vehicle may be e.g. a timber truck, a forwarder or a harvester. The lifted/transferred material may be e.g. timber or other longitudinal material, rocks, other piece material, etc.

In this patent application "rotating part" means the part of a rotator, which is arranged to rotate in relation to the boom of the lifting means.

### BRIEF DESCRIPTION OF THE DRAWINGS

Next the invention will be described in more detail with reference to the following drawings:
Fig. 1 illustrates a prior art weighing arrangement in a crane;
Fig. 2a illustrates a block diagram of an exemplary arrangement according to one embodiment of the invention;
Fig. 2b illustrates a block diagram of an exemplary arrangement according to a second embodiment of the invention; and
Fig. 2c illustrates a block diagram of an exemplary arrangement according to a third embodiment of the invention.

### DETAILED DESCRIPTION OF EMBODIMENTS

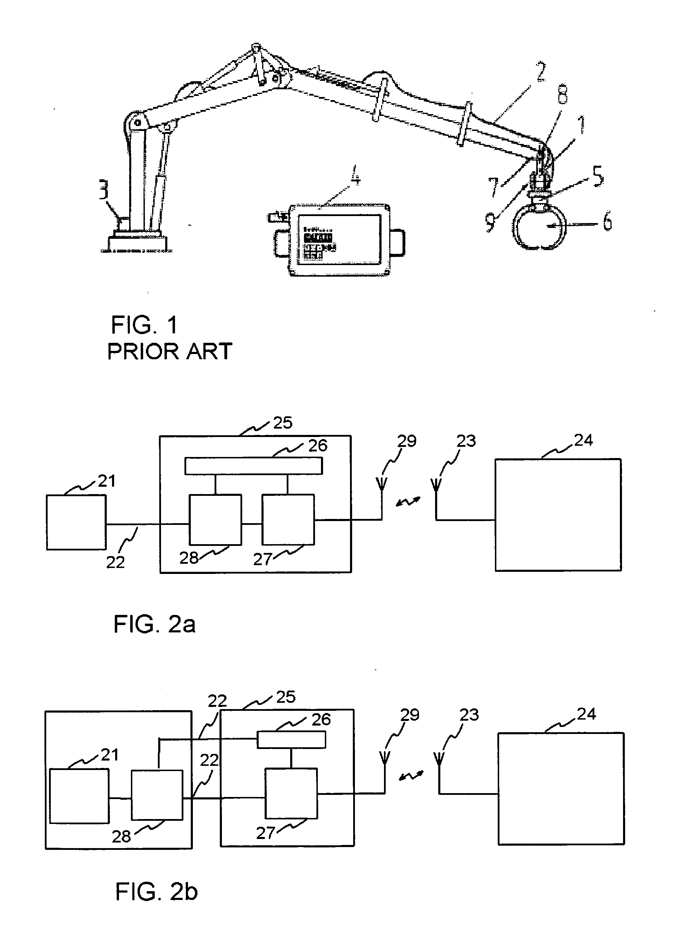

Figure 2a illustrates a block diagram for an arrangement according to an embodiment of the invention. In this embodiment there is a sensor 21 which gives an electrical signal including information on a property of the load. The sensor may be e.g. a strain gauge, whereby the signal is proportional to the weight of the load. The sensor 21 is installed between the boom and the rotating part of the rotator of the lifting means. The sensor may be installed in a hanger or in a a non-rotating part of the rotator, for example. The signal from the sensor is led through a cable 22 into an electronics unit 25, which is installed at the boom of the lifting means. The electronics unit may preferably be installed inside the boom, but it alternatively also be installed partly or in whole outside the actual boom structure at its side. The electronics unit 25 includes signal processing means 28, which amplifies the signal received from the sensor, and converts the signal into digital mode. The digital sensor signal is then led to data transfer means 27, which transmit the data in a wireless way through an antenna 29. The electronics unit also includes an energy source 26, such as a loadable battery, for supplying electricity to the signal processing means and the data transfer means. There may also or alternatively be a solar cell, or a transducer for converting movement of the boom into electrical energy. The transmitted signal is received at the antenna 23 of the measurement/control unit 24, wherein the signal is converted into displayed information, such as weight information. The measurement/control unit may be located at the cabin of the material transfer vehicle. The wireless data transmission may be based on radio modem channels, Bluetooth, WLAN (Wireless Local Area Network), mobile phone networks, such as GPRS, or it may be based on some other wireless communication method.

Figure 2b illustrates a block diagram for an arrangement according to a second embodiment of the invention. Also in this embodiment there is a sensor 21 which gives an electrical signal including information on a property of the load. The sensor may thus be e.g. a strain gauge, whereby the signal is proportional to the weight of the load. In this embodiment the signal processing means 28 is integrated with the sensor 21 into an integrated component. This sensor component is installed between the boom and the rotating part of the rotator of the lifting means. The sensor and signal processing component may be installed in a hanger or in a non-rotating part of the rotator, for example.. The processed signal is led through a cable 22 into an electronics unit 25, which is installed at the boom of the lifting means. The electronics unit may preferably be installed inside the boom, but it alternatively also be installed partly or in whole outside the actual boom structure at its side. The electronics unit 25 includes data transfer means 27, which transmit the data in a wireless way through an antenna 29. The electronics unit also includes an energy source 26, such as a loadable battery, for supplying electricity to the signal processing means 28 and the data transfer means 27. There may also or alternatively be a solar cell, or a transducer for converting movement of the boom into electrical energy. The cable 22 also includes wires for supplying voltage to the signal processing means which are located between the boom and the rotating part of the rotator in this embodiment. The transmitted signal is received at the antenna 23 of the measurement/control unit 24, wherein the signal is converted into displayed information, such as weight information. In this embodiment there is an advantage that the signal on the cable 22 has higher amplitude, and is therefore less sensitive to interference.

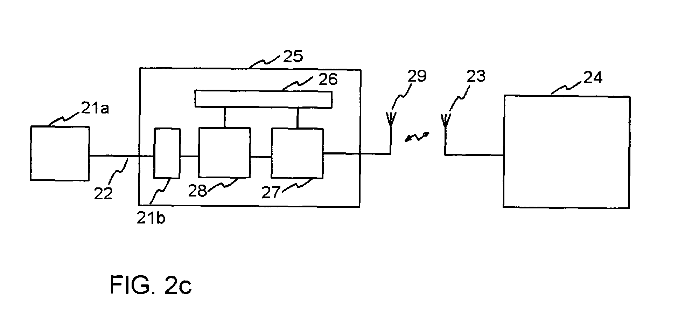

Figure 2c illustrates a block diagram for an arrangement according to a third embodiment of the invention. In this embodiment there is a hydraulic cylinder 21a as a sensor, which is installed between the boom and the rotating part of the rotator of the lifting means. The hydraulic cylinder may be installed in a hanger thus forming a part of the hanger, or in a non-rotating part of the rotator. The pressure from the hydraulic cylinder is led through a hydraulic hose 22 into an electronics unit 25, which is installed at the boom of the lifting means. The electronics unit 25 includes a pressure sensor 21b, which converts the hydraulic pressure into an electrical signal. However, it is also alternatively possible that the pressure sensor 21b is integrated with the hydraulic cylinder 21a and thus located between the boom end and the rotating part of the rotator. In this case, the arrangement comprises an electric cable 22 from the pressure sensor to the electronics unit 25, instead of a hydraulic hose. The electronics unit includes signal processing means 28, which amplifies the signal received from the sensor, and converts the signal into digital mode. However, in another embodiment of the invention the signal processing means is integrated with the hydraulic cylinder and the pressure sensor, which all locate between the boom end and the rotating part of the rotator.

The digital sensor signal is led to data transfer means 27, which transmit the data in a wireless way through an antenna 29. The electronics unit also includes an energy source 26, such as a loadable battery, for supplying electricity to the signal processing means and the data transfer means. There may also or alternatively be a solar cell, or a transducer for converting movement of the boom into electrical energy. The transmitted signal is received at the antenna 23 of the measurement/control unit 24, wherein the signal is converted into displayed information, such as weight information. The measurement/control unit may be located at the cabin of the material transfer vehicle.

The measurement/control unit preferably includes both input and output user interface, such as a keyboard, push buttons, a display and/or a touch screen, for example for example, the weighing equipment may perform the weighing of the load during the load is lifted to the loading space of the vehicle, and display the weighing results at the display of the measurement/control unit. The user may indicate that the measurement result is saved by pressing a corresponding push button, for example, whereby the arrangement is adapted to register the detected weight of the load. It is also possible that the registering is activated when the boom's position is within certain limits, such as when the boom is turned between the studs of a timber truck or a forwarder to which the boom is articulated. It is also possible to calculate a standard deviation of a continuous detection of the load weight, whereby the measurement result is registered when the standard deviation value is within a certain limit. It is also possible to provide some other triggering signal for the detection of the measurement.

The scope of the patent will be defined by the appended claims. Skilled persons will appreciate the fact that various changes and modifications may be made to the explicitly disclosed embodiments and features thereof without diverging from the scope as set forth in the claims.

For example, the sensor may also read/measure some other property of the load than weight. It may be e.g. a reader for an RFID tag which is attached to the load. The RFID tag may include information about the load such as quality, owner or transport destination of the load etc. The sensor may also measure other properties of the load than weight, such as width of the load. Such a sensor may be based on mechanical or optical measurement, for example.

## Claims

1. An arrangement for detecting weight of a load manipulated by a lifting means, said lifting means comprising a boom, an actuating means for catching a load to be manipulated, and a rotator attached between the boom and the actuating means for rotating said actuating means in relation to the boom, wherein the arrangement comprises:
- sensor means (21) for detecting said weight of said load and outputting an electric signal corresponding said detected weight,
- signal processing means (28) for processing said output signal from the sensor means to a transferrable electronic signal,
**characterized in that** the arrangement further comprises:
- data transferring means (27) for transferring said transferrable electronic signal in a wireless way to a receiving means of a measurement/control unit (24) of a material transfer vehicle, and
- an electronics unit comprising a power supply (26) for providing power at least for the signal processing means (28) and data transferring means (27),
and wherein
- said sensor means (21) are arranged between the boom and the rotating part ,
- said electronics unit is arranged at said boom, and
- said sensor means is connected to said electronics unit (25) with a cable or a hose (22).

2. An arrangement according to any of the previous claims, wherein the sensor means comprises a strain gauge means being adapted to output an electric signal proportional to the weight introduced by said load and provide said electric signal to the signal processing means.

3. An arrangement according to claim 1, wherein the sensor means comprises a hydraulic cylinder, the inner pressure of which is proportional to the weight introduced by said load wherein the inner pressure of the cylinder is conducted to a pressure sensor converting the pressure to an electric signal corresponding to said pressure and providing said electric signal to the signal processing means.

4. An arrangement according to claim 3, wherein the pressure sensor is arranged at the boom.

5. An arrangement according to claim 3, wherein the pressure sensor is located by the hydraulic cylinder, whereby the arrangement comprises a signal cable from the pressure sensor to signal processing means arranged at the boom.

6. An arrangement according to any of the previous claims, wherein the lifting means further comprises a hanger, and wherein the sensor means, such as the strain gauge or hydraulic cylinder for measuring the load, is attached to the hanger.

7. An arrangement according to any of the previous claims, wherein the arrangement is adapted to register the detected weight of the load when:
- the boom's position is within certain limits, such as when the boom is turned between the studs of a timber truck or a forwarder to which the boom is articulated,
- a standard deviation of a continuous detection of the load is within a certain limit, or
- other triggering signal is provided to trigger the detection, such as command by the user of the arrangement.

8. An arrangement according to any of the previous claims, wherein the sensor means comprises an RFID-reader adapted to read data of an RFID-tag associated with the load to be manipulated.

9. An arrangement according to any of the previous claims, wherein the signal processing means comprises an amplifier and/or an AD-converter, and wherein at least part of the signal processing means is arranged at the boom.

10. An arrangement according to any of the previous claims, wherein the data transferring means comprises a radio modem, Bluetooth, WLAN means or GPRS communication means.

11. A lifting means, comprising an arrangement according to any of claims 1-10 for detecting weight of a load manipulated by said lifting means.

12. A material transfer vehicle, such as a timber truck, forwarder or harvester, comprising a lifting means according to claim 11.

13. A material transfer vehicle according to claim 12, wherein the material transfer vehicle further comprises a receiving means for receiving wireless electrical signal transferred by the transferring means, data analysing means for analysing said received electrical signal and user interface means for displaying said analysed data

## Patentansprüche

1. Eine Anordnung zum Erkennen des Gewichts einer von einem Hebemittel manipulierten Last, wobei das Hebemittel einen Baum, ein Betätigungsmittel zum Aufnehmen der zu manipulierenden Last und einen Rotor, der zwischen dem Baum und dem Betätigungsmittel zum Rotieren des Betätigungsmittels in Bezug auf den Baum angeordnet ist, wobei die Anordnung aufweist:
- Sensormittel (21) zum Erkennen des Gewichts einer Last und Ausgeben eines elektrischen Signals entsprechend dem erkannten Gewicht,
- Signalverarbeitungsmittel (28) zum Verarbeiten des Ausgangssignals des Sensormittels in ein übertragbares elektronisches Signal,
**dadurch gekennzeichnet, dass** die Anordnung weiter aufweist:
- Datenübertragungsmittel (27) zum Übertragen des übertragbaren elektrischen Signals in drahtloser Weise auf ein Empfangsmittel einer Mess-/Steuereinheit (24) eines Materialübergabefahrzeugs, und
- eine elektronische Einheit mit einer Spannungsversorgung (26) zum Versorgen wenigstens des Signalverarbeitungsmittel (28) und des Datenübertragungsmittel (27) mit einer Leistung, und wobei
- das Sensormittel (21) zwischen dem Baum und dem rotierenden Teil angeordnet ist,
- die elektronische Einheit an dem Baum angeordnet ist, und
- das Sensormittel mit der elektrischen Einheit (25) über ein Kabel oder einen Schlauch (22) verbunden ist.

2. Eine Anordnung nach einem der vorangehenden Ansprüche, wobei das Sensormittel einen Dehnungsmessstreifen aufweist, der zum Ausgeben eines elektrischen Signals proportional zu dem Gewicht, das von der Last aufgeht, und zum Zuführen des elektrischen Signals auf das Signalverarbeitungsmittel eingerichtet ist.

3. Eine Anordnung nach Anspruch 1, wobei das Sensormittel einen hydraulischen Zylinder aufweist, dessen Innendruck zu dem Gewicht, das von der Last aufgebracht wird, proportional ist, wobei der Innendruck des Zylinders einen Drucksensor zugeführt wird, der den Druck in ein elektrisches Signal entsprechend dem Druck umwandelt und das elektrische Signal dem Signalverarbeitungsmittel zuführt.

4. Eine Anordnung nach Anspruch 3, wobei der Drucksensor an dem Baum angeordnet ist.

5. Eine Anordnung nach Anspruch 3, wobei der Drucksensor von dem hydraulischen Zylinder verlagert wird, wobei die Anordnung ein Signalkabel von dem Drucksensor zu dem Signalverarbeitungsmittel, das an dem Baum angeordnet ist, aufweist.

6. Eine Anordnung nach einem der vorangehenden Ansprüche, wobei das Hebemittel weiter eine Aufnahme aufweist und wobei das Sensormittel, etwa der Dehnungsmessstreifen oder der hydraulische Zylinder zum Messen der Last an der Aufnahme angeordnet ist.

7. Eine Anordnung nach einem der vorangehenden Ansprüche, wobei die Anordnung eingerichtet ist zum Registrieren des erkannten Gewichts der Last, wenn:
- die Position des Baums innerhalb bestimmter Grenzen ist derart, dass wenn der Baum zwischen den Ständern eines Langholzwagens oder eines Forwarders, am dem der Baum angelenkt ist, gedreht wird,
- eine Standardabweichung einer kontinuierlichen Erkennung der Last innerhalb einer bestimmten Grenze ist, oder
- ein anderes Triggersignal zum Triggern der Erkennung, etwa ein Befehl durch den Nutzer der Anordnung, vorliegt.

8. Eine Anordnung nach einem der vorangehenden Ansprüche, wobei das Sensormittel einen RFID-Leser aufweist, der zum Lesen von Daten eines RFID-Ettikets, die der zu manipulierenden Last zugehörig sind, eingerichtet ist.

9. Eine Anordnung nach einem der vorangehenden Ansprüche, wobei das Signalverarbeitungsmittel einen Verstärker und/oder eine AD-Wandler aufweist und wobei wenigstens ein Teil des Signalverarbeitungsmittels an dem Baum angeordnet ist.

10. Eine Anordnung nach einem der vorangehenden Ansprüche, wobei das Datenübertragungsmittel ein Radiomodem, Bluetooth, WLAN-Mittel oder GPRS-Kommunikationsmittel aufweist.

11. Ein Hebemittel mit einer Anordnung nach einem der Ansprüche 1-10 zum Erkennen des Gewichts einer von dem Hebemittel manipulierten Last.

12. Ein Materialübertragungsfahrzeug in einem Langholzlaster, ein Forwarder oder eine Erntemaschine, das mit einem Hebemittel nach Anspruch 11 versehen ist.

13. Ein Materialübergabefahrzeug nach Anspruch 12, wobei das Materialübergabefahrzeug weiter ein Aufnahmemittel zum Aufnehmen des drahtlosen elektrischen Signals, das von dem Übertragungsmittel übertragen worden ist, Datenanalysemittel zum Analysieren des empfangenen elektrischen Signals und eine Verwenderschnittstelle zum Anzeigen der analysierten Daten aufweist.

## Revendications

1. Agencement pour détecter le poids d'une charge manipulée par un moyen de levage, ledit moyen de levage comprenant une flèche, un moyen d'actionnement pour prendre une charge à manipuler, et un moyen de rotation attaché entre la flèche et le moyen d'actionnement pour faire tourner ledit moyen d'actionnement par rapport à la flèche, dans lequel l'agencement comprend :
- un moyen de capteur (21) pour détecter ledit poids de ladite charge et délivrer un signal électrique correspondant au dit poids détecté,
- un moyen de traitement de signal (28) pour traiter ledit signal de sortie du moyen de capteur en un signal électronique transférable,
**caractérisé en ce que** l'agencement comprend en outre :
- un moyen de transfert de données (27) pour transférer ledit signal électronique transférable d'une manière sans fil à un moyen de réception d'une unité de mesure/commande (24) d'un véhicule de transfert de matériaux, et
- une unité électronique comprenant une alimentation énergétique (26) pour fournir de l'énergie au moins au moyen de traitement de signal (28) et au moyen de transfert de données (27),
et dans lequel
- ledit moyen de capteur (21) est agencé entre la flèche et la partie de rotation,
- ladite unité électronique est agencée au niveau de ladite flèche, et
- ledit moyen de capteur est relié à ladite unité électronique (25) par un câble ou un flexible (22).

2. Agencement selon la revendication précédente, dans lequel le moyen de capteur comprend un moyen indicateur de déformation adapté pour délivrer un signal électrique proportionnel au poids introduit par ladite charge et pour fournir ledit signal électrique au dit moyen de traitement de signal.

3. Agencement selon la revendication 1, dans lequel le moyen de capteur comprend un vérin hydraulique dont la pression intérieure est proportionnelle au poids introduit par ladite charge, dans lequel la pression intérieure du vérin est conduite vers un capteur de pression convertissant la pression en un signal électrique correspondant à ladite pression et fournissant ledit signal électrique au moyen de traitement de signal.

4. Agencement selon la revendication 3, dans lequel le capteur de pression est agencé au niveau de la flèche.

5. Agencement selon la revendication 3, dans lequel le capteur de pression est situé près du vérin hydraulique, de telle manière que l'agencement comprenne un câble de signal allant du capteur de pression au moyen de traitement de signal agencé au niveau de la flèche.

6. Agencement selon l'une quelconque des revendications précédentes, dans lequel le moyen de levage comprend en outre un moyen de suspension, et dans lequel le moyen de capteur, tel que l'indicateur de déformation ou le vérin hydraulique pour mesurer la charge, est attaché au moyen de suspension.

7. Agencement selon l'une quelconque des revendications précédentes, dans lequel l'agencement est adapté pour enregistrer le poids détecté de la charge lorsque :
- la position de la flèche est dans certaines limites, comme lorsque la flèche est tournée entre les montants d'un camion de transport de bois ou d'un porteur avec lesquels la flèche est articulée,
- un écart-type d'une détection continue de la charge est à l'intérieur d'une certaine limite, ou
- un autre signal de déclenchement est fourni pour déclencher la détection, comme une commande de l'utilisateur de l'agencement.

8. Agencement selon l'une quelconque des revendications précédentes, dans lequel le moyen de capteur comprend un lecteur RFID adapté pour lire des données d'une étiquette RFID associée à la charge à manipuler.

9. Agencement selon l'une quelconque des revendications précédentes, dans lequel le moyen de traitement de signal comprend un amplificateur et/ou un convertisseur analogique-numérique, et dans lequel au moins une partie du moyen de traitement de signal est agencée au niveau de la flèche.

10. Agencement selon l'une quelconque des revendications précédentes, dans lequel le moyen de transfert de données comprend un moyen de modem radio, Bluetooth, réseau local sans fil ou un moyen de communication GPRS.

11. Moyen de levage, comprenant un agencement selon l'une quelconque des revendications 1 à 10 pour détecter le poids d'une charge manipulée par ledit moyen de levage.

12. Véhicule de transfert de matériaux, comme un camion de transport de bois, un porteur ou une moissonneuse, comprenant un moyen de levage selon la revendication 11.

13. Véhicule de transfert de matériaux selon la revendication 12, dans lequel le véhicule de transfert de matériaux comprend en outre un moyen de réception pour recevoir un signal électrique sans fil transféré par le moyen de transfert, un moyen d'analyse de données pour analyser ledit signal électrique reçu et un moyen d'interface d'utilisateur pour afficher lesdites données analysées.
